# EUROPÄISCHE PATENTANMELDUNG

(11) **EP 2 410 280 A1**
(43) Veröffentlichungstag der Anmeldung: **25.01.2012**
(21) Anmeldenummer: 11005821.1
(22) Anmeldetag: 15.07.2011
(51) Int. Cl.: F41G 5/08, F41H 11/02

(54) **Objektschutz- Verfahren und- Einrichtung**

(30) Priorität: 20.07.2010 DE 102010027584
(71) Anmelder: Diehl BGT Defence GmbH & Co.KG, 88662 Überlingen (DE)
(72) Erfinder: Gundel, Bernd, 91284 Neuhaus (DE); Katzenbeißer, Stefan, 88213 Ravensburg (DE); Schlüter, Klaus Dr., 90542 Eckental (DE)
(74) Vertreter: Diehl Patentabteilung

(57) **Zusammenfassung**

Um die Reaktionszeit für die Abwehr eines ein geschütztes Objekt (11) anfliegenden Flugkörpers (17) durch eine Abwehrgranate, die von einem objektfesten hochdynamischen Werfer (16) abgeschossen wird, noch weiter zu verringern, wird der Überwachungsphase zum Einweisen des Werfers (16) mit seinem Zielverfolgungsradar (19) eine Frühwarnphase vorgeschaltet, in der ein passiver IR-Sensor (12) etwa auf das Zünden des Startmotors des Flugkörpers (17) schon anspricht, ehe der überhaupt vom Überwachungssensor (18) erfasst wird. Die Frühwarnphase wird insbesondere zugeschaltet, wenn in der näheren Umgebung des Objektes (11) gute Deckungsmöglichkeiten bei kurzen Bedrohungsabständen, wie bei Fahrt durch urbane Umgebung oder felsiges Gelände, gegeben sind. In einen Sektor (15), der vom Werfer 16 schon in seiner Bereitschaftsstellung erfasst ist, braucht kein Frühwarnsensor (12) orientiert zu werden.

## Beschreibung

### Die Erfindung betrifft ein Verfahren bzw. eine Einrichtung gemäß dem jeweiligen

### Oberbegriff der beiden Hauptansprüche.

Die gattungsbildenden Objektschutz-Maßnahmen sind aus der DE 100 24 320 A1, als heute so genanntes Active VEhicle Protection System, bekant. Danach wird eine Abwehrgranate gegen einen - ein, insbesondere bewegliches, Objekt anfliegenden - Flugkörper aus wenigstens einem objektfest installierten, in Azimut und Elevation extrem schnell richtbaren Werfer abgefeuert und so gezündet, dass der Flugkörper infolge Sensor- oder Strukturbeschädigung durch Splitter- oder Blastwirkung noch in sicherer Entfernung vom Objekt unschädlich gemacht wird. Dem Zielnachführen des Werfers dient ein werferfestes hochauflösendes Zielverfolgungs-Dopplerradar, das seine Zieleinweisung von einem objektfesten raumabtastenden Überwachungssensor (beispielsweise einem Radar mit der Schwenkcharakteristik einer modularen Planarantenne) erfährt und somit bei Zielauffassung, zugleich mit dem Zielverfolgungsradar, die Richtachse des Werfers aus seiner Bereitschaftsstellung heraus in das fragliche Raumsegment verschwenkt.

Dieses extrem schnell, im Millisekundenbereich reagierende Objektschutz-System hat sich an Bord von gepanzerten Fahrzeugen bewährt. Für Belange der Praxis ist allerdings bedeutsam, dass der Überwachungssensor - sei er nun ein Radarsystem oder ein Infrarotkamerasystem - erst wirksam ist, wenn bei entsprechend kurzem verbliebenem Bedrohungsabstand bereits Sichtverbindung vom gefährdeten Objekt zum angreifenden Flugkörper besteht; was besonders brisant bei tief anfliegenden Flugkörpern ist, und bei Operationen in Umgebungen, die potentiellen Angreifern gute Deckungsmöglichkeiten bei kurzen Bedrohungsabständen bieten, wie in felsigem Gelände und insbesondere beim Durchfahren urbaner Zonen.

In Erkenntnis solcher Gegebenheiten liegt vorliegender Erfindung die technische Problemstellung zugrunde, eine noch weiter verkürzte Reaktionszeit bis zum Abfeuern der Abwehrgranate zu erreichen.

Diese Aufgabe wird erfindungsgemäß nach den in den beiden Hauptansprüchen angegebenen wesentlichen Merkmalen gelöst. Danach wird der Überwachungsphase zum Einweisen der Zielverfolgungsphase noch eine Frühwarnphase vorgeschaltet, die mit wenigstens einem preiswert verfügbaren da passiv, richtungsunabhängig arbeitenden Infrarotsensor realisierbar ist. Der wird also nicht zur Zielverfolgung (Tracking) eingesetzt, sondern er spricht insbesondere auf die typische Abschuss-Signatur des angreifenden Flugkörpers an, wie sie durch die expandierende Gaswolke nach dem Zünden eines Flugkörper-Startmotors geprägt ist. So wird nun schon durch den Frühwarnsensor der Überwachungssensor aktiviert, noch ehe er - etwa umgebungsbedingt - Kontakt zum Angreifer aufnehmen kann, was die Zeitspanne bis zur Richtungseinweisung des Zielverfolgungsradars entsprechend verkürzt.

Um hinsichtlich der Rundum-Ansprechcharakteristik eines solchen IR-Sensors Abschattungen und Totbereiche durch Aufbauten zu vermeiden, sind zweckmäßigerweise mehrere derartige Frühwarnsensoren auf dem Objekt installiert. Infolge rückwärtiger Abschattungen führt das zu einer gewissen Azimutzuordnung der Frühwarnsensoren, die durch Array-Anordnungen oder einfach durch Abschirmungen noch präzisiert werden kann. So kann bei Ansprechen eines dieser Frühwarnsensoren der Überwachungssensor eines Werfers bereits in den betroffenen Sektor vororientiert werden und dadurch den angreifenden Flugkörper früher, in noch größerem Abstand zum zu sichernden Objekt, erfassen.

Der IR-Frühwarnsensor braucht also keine Rundum-Charakteristik aufzuweisen. Zumal die beiden an den seitlichen Flanken des fahrbaren Objektes betriebenen Werfer ohnehin in ihren Bereitschaftsstellungen mit ihrem Zielverfolgungsradar querab seitwärts gerichtet sind, genügt es im Prinzip, die passive Infrarot-Frühwamfunktion am Objekt je einmal in Fahrtrichtung nach vorne und entgegengesetzt nach rückwärts gerichtet zu installieren, um wenigstens einen der Werfer bei Ansprechen eines dieser beiden gegensinnig orientierten Frühwarnsensoren schon gleich nach der aktuellen Bedrohung auszurichten. Das führt zu einem Zeitgewinn für die rechtzeitige Reaktion insbesondere auch noch bei sehr kurzem Bedrohungsabstand; der effektive minimale Bekämpfungsabstand wird also verkürzt und dadurch die Schutzfunktion in ihrem Nutzwert gesteigert.

Von Vorteil ist darüber hinaus, dass die Eigenverratsgefahr reduziert wird, wenn die aktiven Radarsysteme für die Grobeinweisung des Werfers durch ein Überwachungsradar und dann für das Zieltracking zum Ausrichten des Werfers erst nach der Weckfunktion des Ansprechens des Frühwarnsensors und dadurch möglichst spät zugeschaltet werden.

Das häufige rasche Einschwenken des Werfers in eine vom Frühwarnsensor gelieferte grobe Zielrichtung, dem im Falle eines durch den Überwachungssensor oder durch das Zielverfolgungs-Dopplerradar dann festgestellten Fehlalarmes unmittelbar darauf ein ebenso stark beschleunigtes Zurückschwenken in die Bereitschaftsstellung folgt, bedingt trotz der hohen Dynamik eine gewisse schaltungstechnisch und kinetisch bedingte Rüstzeit bis zur nächsten Zielauffassung; ganz abgesehen von der erheblichen mechanischen Strukturbelastung durch die hochbeschleunigten Massen.

Die Falschalarmrate kann gering gehalten werden, wenn gemäß einer Weiterbildung der Erfindung diese Frühwarnphase nicht ständig in Betrieb ist, sondern nur in bestimmten Risikosituationen der Überwachungsphase zur Zieleinweisung für die Zielverfolgung automatisch vorgeschaltet wird. Solche kritischen Risikosituationen, die potentiellen Angreifern gute Deckungsmöglichkeiten bei kurzen Bedrohungsabständen bieten, sind insbesondere das Durchqueren felsigen Geländes oder urbaner Zonen, also Situationen, bei denen sich eine zur Deckung des Angreifers geeignete Struktur in geringerer Entfernung als typisch 30 Metern befindet; was durch gelegentliches entfernungsmessendes Abtasten der aktuellen Objekt-Umgebung mittels eines der Radarsysteme festgestellt werden kann; aber auch mittels eines der Infrarotsysteme, nämlich durch eine Flächenauflösungs-Bildverarbeitung. Eine weniger als 30 Meter entfernte massive Mauer oder Felsstruktur würde zum Vorschalten der Frühalarmphase führen. Eine schlanke oder niedrige Flächenstruktur wie von einem dünnen Baumstamm oder von einer kleinen Mülltonne würde als gefährdungsunkritisch unbeachtet bleiben. Wegen ausreichender Reaktionszeit für das Richten des Werfers bei größeren Freiräumen in der Objektumgebung bleibt bei letztgenannter Konstellation die Überwachungsphase ohne vorgeschaltete Frühwarnphase aktiv.

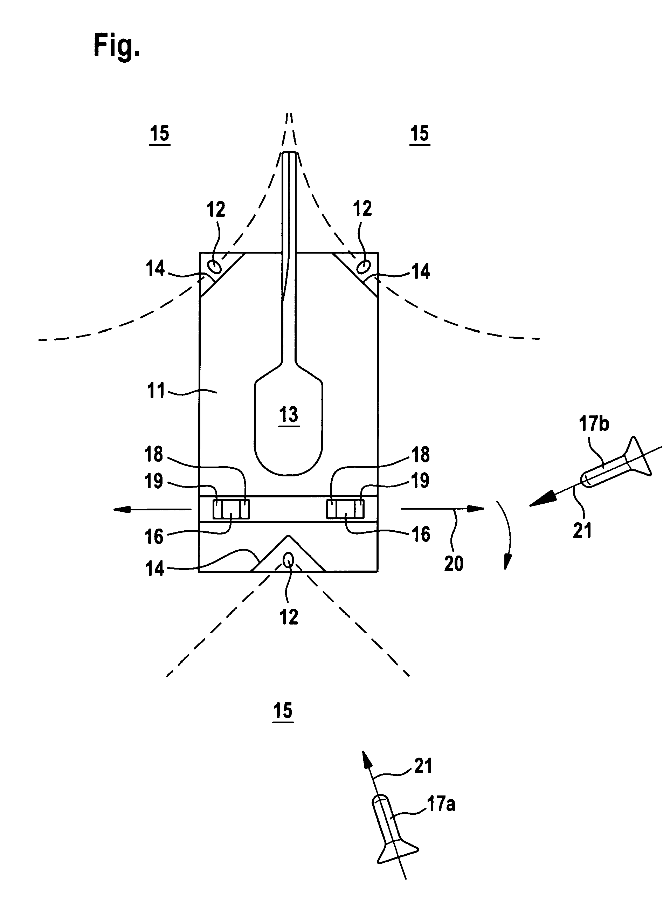

Zu näherer Veranschaulichung der Erfindung wird nachstehend ein auf das Funktionswesentliche verallgemeinertes, nicht maßstabsgerecht verkleinert skizziertes Realisierungsbeispiel für eine solche Objektschutz-Einrichtung beschrieben. Die einzige Figur der Zeichnung stellt die Draufsicht auf ein mit mehreren IR-Frühwarnsensoren bestücktes Objekt dar.

Beim skizzierten Objekt 11 handelt es sich um ein gepanzertes Fahrzeug wie einen Kampfpanzer. Der ist mit mehreren passiven IR-Frühwarnsensoren 12 bestückt. Die weisen an sich eine Rundum-Charakteristik auf, sind aber infolge Abschattungen von Aufbauten 13 und/oder Abschirmungen 14 bestimmten grob definierten azimutalen Sektoren 15 zugeordnet. Zwei Werfer 16 sind einander entgegengesetzt an den beiden Flanken des Objektes 11 querab zu dessen Längs- und Fahrtrichtung orientiert; in diese Sektoren sind keine Frühwarnsensoren ausgerichtet.

Wenn die grobe Richtung zum Startort eines das Objekt 11 bedrohenden Flugkörpers 17a von einem Frühwarnsensor 12 erfasst ist, wird der objektfeste Überwachungssensor 18 - etwa ein Radararray oder eine Infrarotkamera - aktiviert und mit seiner Abstrahlung in etwa diese Richtung orientiert, um dann nach Zielauffassung das werferfeste Zielverfolgungsradar 19 eines der Werfer 16 - und somit auch seine Abschussrichtung 20 - der Anflugrichtung 21 entgegen zu schwenken und dem angreifenden Flugkörper 17a eine Abwehrgranate (nicht dargestellt) entgegenzufeuern.

Wenn dagegen der Flugkörper 17b sich in einem Sektor nähert, in den ohnehin schon der Werfer 16 in seiner Bereitschaftsstellung orientiert ist, tritt bei der skizzierten Ausstattung des Objektes 11 kein Frühwarnsensor 12 zuvor in Aktion, es erfolgt durch den Überwachungssensor 18 unverzüglich die Ausrichtung des Werfers 16 mit seinem Zielverfolgungsradar 19 auf den Flugkörper 17b, ohne zuvor einen Frühwarnsensor zu aktivieren.

Die Reaktionszeit für die Abwehr eines ein geschütztes Objekt 11 anfliegenden Flugkörpers 17 durch eine Abwehrgranate, die von einem objektfesten hochdynamischen Werfer 16 abgeschossen wird, kann also erfindungsgemäß noch weiter verringert werden, indem der Überwachungsphase zum Einweisen des Werfers 16 mit seinem Zielverfolgungsradar 19 eine Frühwarnphase vorgeschaltet wird, in der ein passiver IR-Sensor 12 etwa auf das Zünden des Startmotors des Flugkörpers 17 schon anspricht, ehe der überhaupt vom Überwachungssensor 18 erfasst wird. Diese Frühwarnphase wird insbesondere zugeschaltet, wenn in der näheren Umgebung des Objektes 11 gute Deckungsmöglichkeiten bei kurzen Bedrohungsabständen, wie bei Fahrt durch urbane Umgebung oder felsiges Gelände, gegeben sind. In einen Sektor 15, der vom Werfer 16 schon in seiner Bereitschaftsstellung erfasst ist, braucht kein Frühwarnsensor 12 orientiert zu werden.

### Bezugszeichenliste

- 11: Objekt
- 12: Frühwarn-Sensoren (an 11, zum Aktivieren von 18)
- 13: Aufbauten (von 11)
- 14: Abschirmungen (für 12)
- 15: Sektoren (gemäß 12)
- 16: Werfer (auf 11)
- 17: Flugkörper (gegen 11)
- 18: Überwachungssensor (zum Ausrichten von 19 = 16/20)
- 19: Zielverfolgungsradar (zum Anvisieren von 17)
- 20: Abschussrichtung (von 16)
- 21: Anflugrichtung (von 17)

## Patentansprüche

1. Verfahren zum Schützen eines Objektes (11) gegen einen anfliegenden Flugkörper (17) mittels einer Abwehrgranate, die dem Flugkörper (17) aus einem Werfer (16), nach einer Überwachungsphase zum Einweisen einer Zielverfolgungsphase, entgegengefeuert wird, **dadurch gekennzeichnet, dass** der Überwachungsphase eine Frühwarnphase zum Aktivieren der Überwachungsphase vorgeschaltet wird.

2. Verfahren nach dem vorangehenden Anspruch,
**dadurch gekennzeichnet,**
**dass** in der Frühwarnphase eine vom Flugkörper (17), insbesondere beim Zünden seines Startmotors, ausgehende Infrarotstrahlung sensiert wird.

3. Verfahren nach einem der vorangehenden Ansprüche,
**dadurch gekennzeichnet,**
**dass** die Frühwarnphase erst aktiviert wird, wenn in der näheren Umgebung des Objektes (11) gute Deckungsmöglichkeiten bei kurzen Bedrohungsabständen festgestellt werden.

4. Verfahren nach einem der vorangehenden Ansprüche,
**dadurch gekennzeichnet,**
**dass** Frühwarnsensoren (12) bestimmte Azimut-Sektoren (15) um das Objekt (11) herum zugeordnet werden, die nicht von einem Werfer (16) in seiner Bereitschaftsstellung erfasst werden.

5. Einrichtung zum Schutz eines Objektes (11) gegen einen anfliegenden Flugkörper (17) mittels eines von einem Überwachungssensor (18) und einem von diesem einzuweisenden werferfesten Zielverfolgungsradar (19) auf die Anflugrichtung (21) ausrichtbaren Werfers (16), zum Ausüben eines der Verfahren nach den vorangehenden Ansprüchen,
**dadurch gekennzeichnet,**
**dass** ein objektfester passiver IR-Frühwarnsensor (12) auf den Überwachungssensor (18) schaltbar ist.

6. Einrichtung nach dem vorangehenden Anspruch,
**dadurch gekennzeichnet,**
**dass** der Frühwarnsensor (12) zum Ansprechen auf das Zünden des Startmotors eines Flugkörpers (17) ausgelegt ist.

7. Einrichtung nach einem der beiden vorangehenden Ansprüche,
**dadurch gekennzeichnet,**
**dass** an Bord des Objektes (11) mehrere Frühwarnsensoren (12) vorgesehen sind, die bestimmten Azimut-Sektoren (15) zugeordnet sind.

8. Einrichtung nach dem vorangehenden Anspruch,
**dadurch gekennzeichnet,**
**dass** Aufbauten (13) und/oder Abschirmungen (15) für Abschattungen zu sektoriellen Zuordnungen der Frühwarnsensoren (12) vorgesehen sind.

9. Einrichtung nach einem der beiden vorangehenden Ansprüche,
**dadurch gekennzeichnet,**
**dass** Sensor-Arrays für die Sektorzuordnung vorgesehen sind.

10. Einrichtung nach einem der drei vorangehenden Ansprüche,
**dadurch gekennzeichnet,**
**dass** für einen Sektor, in den ein Werfer (16) in Bereitschaftsstellung orientiert ist, kein Frühwarnsensor (12) vorgesehen ist.
